# FASCICULE DE BREVET EUROPEEN

(11) **EP 2 174 289 B1**
(45) Date de publication et mention de la délivrance du brevet: **02.11.2016**
(21) Numéro de dépôt: 08827439.4
(22) Date de dépôt: 07.08.2008
(51) Int. Cl.: G06T 5/00, G06T 5/20

(54) **PROCEDE DE TRAITEMENT D'OBJET NUMERIQUE ET SYSTEME ASSOCIE.**
VERFAHREN ZUR VERARBEITUNG EINES DIGITALEN OBJEKTS UND ENTSPRECHENDES SYSTEM
METHOD FOR PROCESSING A DIGITAL OBJECT AND RELATED SYSTEM

(30) Priorité: 07.08.2007 FR 0705754
(43) Date de publication de la demande: 14.04.2010
(73) Titulaire: DxO Labs, 92100 Boulogne Billancourt (FR)
(72) Inventeur: CAO, Frédéric, F-92100 Boulogne-billancourt (FR); GUICHARD, Frédéric, F-92100 Boulogne-billancourt (FR); AZZABOU, Noura, F-92100 Boulogne-billancourt (FR); MOREL, Jean-Michel, F-94235 Cachan Cédex (FR); BUADES, Antoni, E-07122 Palma De Mallorca - Espagne (ES); COLL, Bartomeu, E-07122 Palma De Mallorca - Espagne (ES)
(74) Mandataire: Cabinet Plasseraud
(86) Numéro de dépôt international: PCT/FR2008/051471
(87) Numéro de publication internationale: WO 2009/022083

(56) Documents cités:
- GB-A- 2 390 772
- US-A- 5 736 857
- US-A1- 2001 052 907
- US-A1- 2006 029 285
- US-B1- 6 373 992
- US-B2- 6 937 775
- CHANG WON KIM ET AL: "Noise insensitive high resolution color interpolation scheme considering cross-channel correlation" OPTICAL ENGINEERING SPIE USA, vol. 44, no. 12, décembre 2005 (2005-12), pages 127006-1, XP002482984 ISSN: 0091-3286

## Description

La présente invention concerne le traitement d'objet numérique.

Un objet numérique est constitué d'éléments, c'est-à-dire d'informations élémentaires. Il peut être de natures diverses. Il peut par exemple s'agir d'une image bidimensionnelle dans le cas de la photographie numérique notamment. Dans ce cas, les éléments constitutifs d'une telle image sont des pixels (pour "picture elements").

En variante, l'objet peut être une séquence d'images bidimensionnelles, que l'on peut aussi voir comme une image tridimensionnelle (deux dimensions spatiales et une dimension temporelle). C'est le cas par exemple dans certaines applications médicales ou pour des films. Les éléments constitutifs d'un tel objet sont par exemple les pixels d'une image de la séquence d'images.

L'objet numérique considéré peut encore posséder quatre dimensions, comme c'est le cas pour des films dont chaque image est tridimensionnelle par exemple.

Selon un autre exemple, l'objet numérique pourrait comprendre un son dont les éléments constitutifs sont par exemple des intensités, ou encore un signal modulé dont les éléments constitutifs peuvent correspondre à des intensités et/ou des phases.

Plus généralement, un objet numérique possède une ou plusieurs dimensions parmi les dimensions suivantes : spatiale (par exemple une distance, un angle ou un parcours dans un maillage), temporelle, fréquentielle (par exemple une couleur, une fréquence, une bande de fréquences), une phase, une décomposition selon une autre base d'espace vectoriel (par exemple une décomposition en ondelettes), ou encore toute dimension de tout espace de topologie quelconque.

En plus des informations élémentaires qui le composent, un objet numérique comprend un certain nombre d'attributs, qui peuvent varier selon sa nature. Ces attributs peuvent en particulier être relatifs aux dimensions de l'objet ainsi qu'aux informations élémentaires. On peut alors définir des types d'objets, qui correspondent chacun à des objets ayant un ensemble d'attributs donné. Parmi les attributs typiques d'un objet, on peut citer par exemple la couleur, la géométrie et la netteté. D'autres attributs sont bien sûr également envisageables. Des exemples de type d'objets et d'attributs sont fournis plus bas.

Lorsque l'objet numérique considéré est une image numérique, celle-ci peut être obtenue par exemple à l'aide d'un système d'acquisition, tel qu'un système de prise de vue.

Selon des exemples non limitatifs, le système d'acquisition peut être un appareil photo jetable, un appareil photo numérique, un appareil reflex (numérique ou non), un scanner, un fax, un endoscope, une caméra, un caméscope, une caméra de surveillance, un jouet, une caméra ou un appareil photo intégré ou relié à un téléphone, à un assistant personnel ou à un ordinateur, une caméra thermique, un appareil d'échographie, un appareil d'imagerie IRM (résonance magnétique), un appareil de radiographie à rayons X.

Un système d'acquisition d'images comporte généralement, outre un système optique dont le rôle est de focaliser la lumière, un capteur. Un tel capteur comprend des moyens mécaniques, chimiques, ou électroniques permettant la capture et/ou l'enregistrement d'images.

Le capteur est par exemple un système de cellules photosensibles qui transforme la quantité de lumière reçue en valeurs numériques, et qui attribue à chaque pixel la ou les valeurs qui lui correspondent. L'image brute directement acquise par le capteur est traditionnellement appelée image RAW. Le nombre de valeurs numériques finalement attribuées à chaque pixel dépend du système de prise de vue.

Pour des raisons diverses, les valeurs des informations élémentaires d'une image RAW retournées par le capteur ne sont pas des fonctions complètement déterministes de la quantité de lumière reçue. Elles contiennent une partie aléatoire, appelée bruit, qui n'a pas de rapport avec la scène observée. Le bruit est par exemple dû au caractère particulaire de la lumière ou à des phénomènes thermiques se déroulant dans la circuiterie électronique du capteur.

Une partie du bruit est en général extrêmement locale, et son étendue peut être de l'ordre de grandeur de 1 pixel.

En première approximation, ses propriétés statistiques sont bien décrites par deux paramètres :
- une distance qui donne la distance caractéristique qu'il faut parcourir pour que deux valeurs du bruit soient statistiquement indépendantes ou dont la dépendance soit inférieure à un seuil prédéterminé. Cette distance peut être vue comme la taille du grain numérique dont une définition sera donnée plus bas, et
- une valeur appelée intensité, qui décrit la variation des valeurs numériques induite par le bruit. Dans le cas d'une image en couleurs, le bruit a une valeur sur chaque canal.

Au sens de l'invention, un bruit blanc ou plus généralement un objet « blanc » se définit comme un objet pour lequel les informations élémentaires en une position de l'objet sont dé-corrélées des informations élémentaires de ce même objet en des positions voisines. Les valeurs élémentaires de l'objet sont donc statistiquement indépendantes.

Au sens de l'invention, un bruit « quasi blanc » ou plus généralement un objet « quasi blanc » se définit comme un objet pour lequel les informations élémentaires en une position de l'objet présentent un niveau de corrélation, avec des informations élémentaires de ce même objet en des positions voisines, plus faible qu'un seuil ; ce seuil étant soit prédéterminé par exemple en fonction de la sensibilité de l'oeil au bruit structuré, soit déterminé à partir de l'auto corrélation d'un autre objet ; ainsi ce seuil peut prendre par exemple pour valeur 10% ; ce seuil peut aussi prendre par exemple pour valeur 10% du niveau d'auto corrélation de l'objet original dont est extrait l'objet quasi blanc par l'une des méthodes selon l'invention.

De la même façon, une image autre qu'une image RAW, c'est-à-dire ayant déjà subi un certain nombre de transformations, contient du bruit.

Avant d'être visualisée, une image numérique subit une succession de traitements, appelée chaîne de traitements. Ces traitements ont pour but par exemple d'améliorer la netteté, de supprimer des artéfacts ou de modifier la couleur.

Parmi ces traitements, certains peuvent avoir un effet néfaste sur le bruit contenu dans l'image considérée.

C'est le cas notamment des traitements dits à voisinage, dans le sens où ils transforment les valeurs d'un pixel (ou plus généralement d'un élément d'objet) en fonction des valeurs de pixels voisins (ou plus généralement d'éléments d'objet voisins).

Ces traitements à voisinage utilisent le fait que des positions proches dans une scène contiennent des informations corrélées, c'est-à-dire liées entre elles. Cette hypothèse permet de reconstruire de l'information manquante ou dégradée dans les images numériques.

Non seulement, les valeurs en chaque pixel sont susceptibles d'être modifiées, mais de nouvelles valeurs en chaque pixel peuvent être créées. L'image finale peut donc avoir un nombre de canaux différents de celui de l'image originale. Par exemple, lorsque l'image originale est une image RAW, avec une seule valeur par pixel correspondant à un seul canal, l'image finale, après traitement, peut avoir trois valeurs par pixel correspondant respectivement aux trois canaux rouge, vert et bleu (R,G,B).

Un problème posé par ces traitements à voisinage est que l'hypothèse de corrélation locale de l'information qu'ils font est mauvaise pour le bruit, qui est de nature indépendante aux propriétés physiques de la scène.

Plus précisément, un traitement à voisinage va créer des corrélations dans le bruit ayant pour conséquence l'apparition de structures visibles qui ne correspondent à rien dans la scène observée. Autrement dit, un traitement à voisinage structure le bruit. D'un point de vue mathématique, les traitements à voisinage changent les propriétés statistiques du bruit, comme la fonction d'autocorrélation.

Cette structuration du bruit se traduit visuellement par l'apparition d'un grain numérique. Dans le cas d'une image en couleurs, ce grain apparaît typiquement sous la forme de taches colorées disgracieuses, dont la taille et l'intensité dépendent des traitements à voisinage. Ce grain numérique n'a en général pas le charme de celui d'une photographie argentique, et on souhaite pouvoir s'en affranchir.

Une définition possible pour le grain numérique serait par exemple la fonction d'autocorrélation du bruit qui quantifie la corrélation spatiale du bruit avec lui-même, pris à différentes positions spatiales.

Un autre exemple de traitements pouvant avoir un effet néfaste sur le bruit contenu dans une image numérique concerne les traitements tendant à amplifier le bruit. Ces traitements peuvent provoquer une dégradation de l'image car le bruit y est plus visible, parfois au détriment des informations utiles.

Un exemple de tels traitements est l'augmentation du contraste d'une image. Il consiste schématiquement à rendre les pixels sombres d'une image plus sombres et les pixels clairs de l'image plus clairs. Cette amplification du contraste s'applique de la même façon au bruit contenu dans l'image traitée.

En résumé, les traitements qui structurent ou amplifient le bruit créent des effets indésirables lorsqu'ils sont appliqués à une image numérique bruitée.

Une idée pour tenter de limiter ces effets indésirables serait de débruiter l'image numérique avant de lui appliquer les traitements en question. Cette idée a notamment été envisagée dans US 6,934,056, dans une application spécifique. Ce document prévoit en effet de débruiter une image RAW avant de lui appliquer le traitement à voisinage dit de dématriçage.

Le document US 2006/029285 décrit un traitement d'images où le bruit à introduire est obtenu mathématiquement ou physiquement, tandis que la invention présente permet de additionner le bruit original de la propre image.

Divers algorithmes de débruitage peuvent être utilisés à cet effet. Leur but est de modifier l'image originale pour en déduire, dans l'idéal, une image qui serait celle qu'on obtiendrait en l'absence de bruit.

Cependant, même les meilleures méthodes actuelles de débruitage ne permettent pas de distinguer les textures très fines, comme la rugosité d'une surface ou les irrégularités d'une peau, et le bruit. La plupart de ces méthodes ont pour effet de diminuer l'intensité du bruit au détriment de la finesse de son grain.

De ce fait, le débruitage d'une image numérique, tout en atténuant son bruit, supprime certaines structures fines qui constituent de l'information utile de l'image. L'image qui en résulte peut donner l'impression de manquer de relief et de réalisme.

Bien que l'exemple d'une image numérique ait été plus particulièrement examiné ci-dessus, on note que la même problématique se pose de façon similaire pour les autres sortes d'objets mentionnés plus haut.

Un but de la présente invention est de limiter les inconvénients rappelés ci-dessus.

En particulier, un but de l'invention est de limiter la structuration du bruit contenu dans un objet numérique, sans provoquer une perte excessive de l'information utile.

L'invention propose ainsi un procédé de traitement d'objet numérique comprenant les étapes suivantes :
- débruiter un objet original d'un premier type contenant du bruit pour obtenir un objet débruité dudit premier type ;
- obtenir un objet de bruit quasi blanc du premier type à partir d'une différence entre l'objet original et l'objet débruité ;
- appliquer à l'objet débruité un premier traitement comprenant un traitement à voisinage transformant les valeurs d'un élément d'objet en fonction des valeurs d'éléments d'objet voisins pour obtenir un objet transformé d'un deuxième type, le premier traitement étant tel qu'il aurait pour effet de structurer le bruit contenu dans l'objet original s'il était appliqué audit objet original ;
- appliquer à l'objet de bruit un deuxième traitement blanc pour obtenir un objet de bruit transformé quasi blanc du deuxième type ; et
- introduire dans l'objet transformé l'objet de bruit transformé.

Comme rappelé en introduction, les premier et deuxième types d'objet correspondent chacun à des objets ayant un ensemble d'attributs (e.g. couleur, géométrie, netteté, etc.) donné.

On rappelle par ailleurs qu'un objet quasi blanc se définit comme un objet pour lequel les informations élémentaires en une position de l'objet sont décorrélées ou quasi décorrélées avec les informations élémentaires de ce même objet en des positions voisines.

Un objet quasi blanc s'oppose ainsi à un objet corrélé, lequel vise un objet pour lequel les informations élémentaires en une position de l'objet sont corrélées avec les informations élémentaires de ce même objet en des positions voisines.

Un traitement blanc, quant à lui, est un traitement qui transforme un objet quasi blanc en un objet quasi blanc.

Les traitements à voisinage ont, pour leur part, déjà été définis en introduction.

Ainsi, selon l'invention, l'extraction d'un bruit quasi blanc de l'objet original, en amont de la mise en oeuvre du premier traitement, puis la conservation de son caractère quasi blanc grâce à l'utilisation d'un deuxième traitement qui est un traitement blanc, lui permet de rester quasi blanc et donc lui évite d'être structuré (i.e. corrélé).

En outre, l'information utile extraite de l'objet original, avec le bruit, lors du débruitage, est retrouvée dans l'objet final par réintroduction de l'objet de bruit transformé dans l'objet transformé. Cette réintroduction du bruit n'est pas problématique car le bruit n'a pas été structuré. En particulier, quand on s'intéresse à des images numériques, le grain numérique de l'image finale est de taille identique ou similaire à celle de l'image initiale.

De plus, cette réintroduction du bruit est facilitée par le fait que les premier et deuxième traitements utilisés modifient le type de l'objet débruité et de l'objet de bruit de la même façon pour obtenir des objets de même type, c'est-à-dire ayant les mêmes attributs notamment de couleur, géométrie et netteté. En l'absence de cette mesure, il pourrait être inapproprié voire impossible de combiner l'objet transformé et l'objet de bruit transformé. A titre d'exemple, la « simple » combinaison d'un objet transformé comprenant trois canaux de couleur (e.g. R,G,B) avec un objet de bruit comprenant un seul canal de couleur poserait problème. De même, la combinaison d'un objet transformé corrigé de distortion géométrique avec un objet de bruit non transformé poserait problème, puisque par exemple le bruit des zones sombres ne se superposerait pas avec les zones sombres de l'objet transformé. De même, la combinaison d'un objet transformé dans lequel on aurait enlevé le flou provoqué par l'optique ayant servi à capture l'objet, avec un objet de bruit non transformé poserait problème, puisque l'objet de bruit quasi blanc serait plus flou et masquerait à l'oeil l'augmentation de netteté de l'objet transformé.

Certains ou tous les objets susmentionnés, à savoir l'objet original, l'objet débruité, l'objet transformé, l'objet de bruit et l'objet de bruit transformé peuvent comprendre des images numériques. En variante, ils peuvent appartenir à toute autre catégorie d'objets listée en introduction.

Le deuxième-traitement (atténuation du bruit, modification des couleurs du bruit, etc.) peut avantageusement être choisi pour limiter les effets néfastes du bruit dans l'objet final. On maîtrise ainsi le bruit qui apparaîtra dans l'objet final. De plus, le deuxième traitement n'a pas d'effets négatifs sur l'information utile comprise dans l'objet original, puisqu'il s'applique sur un bruit qui a été préalablement séparé de cet objet.

Le premier traitement appliqué à l'objet débruité peut par exemple comprendre un traitement à voisinage transformant les valeurs d'un élément d'objet en fonction des valeurs d'éléments d'objet voisins, qui aurait pour effet de structurer le bruit contenu dans l'objet original s'il était appliqué audit objet original. A titre d'exemples, le premier traitement peut comprendre un ou plusieurs parmi : un dématriçage lorsque l'objet original est une image RAW, un défloutage et une déformation d'une partie au moins de l'objet débruité.

Selon d'autres exemples, le premier traitement peut comprendre un ou plusieurs parmi : un ajout de grain argentique simulé, une correction d'aberration chromatique latérale, un recalage sub-pixelique d'image, une compression/décompression et un traitement appliqué de manière multi-échelle.

En variante ou en complément, le premier traitement appliqué à l'objet débruité peut comprendre un traitement qui aurait pour effet d'amplifier le bruit contenu dans l'objet original s'il était appliqué audit objet original. A titre d'exemples, le premier traitement peut comprendre un ou plusieurs parmi : une amplification dépendant de la sensibilité d'un capteur dont l'objet original est issu, une augmentation du contraste dans une partie au moins de l'objet débruité et une mise en oeuvre d'une balance des blancs dans une partie au moins de l'objet débruité.

Selon d'autres exemples le premier traitement peut inclure un ou plusieurs parmi : une correction de vignetage, une saturation des couleurs, une transformation des couleurs, une combinaison d'images avec des paramètres de prise de vue différents par exemple pour augmenter artificiellement la dynamique du capteur.

Le deuxième traitement appliqué à la différence entre l'objet original et l'objet débruité peut associer à chaque élément de l'objet de bruit résultant (par exemple à chaque pixel de l'image de bruit résultante) au moins une valeur dépendant de l'un ou plusieurs parmi : une valeur associée à au moins un élément correspondant de la différence entre l'objet original et l'objet débruité, une valeur dépendant d'une valeur associée à au moins un élément correspondant d'au moins un objet parmi l'objet original, l'objet débruité et l'objet transformé, et une valeur dépendant d'au moins un paramètre exogène.

L'invention propose également un système de traitement d'objet numérique agencé pour mettre en oeuvre le procédé susmentionné. Le système comprend :
- une unité de débruitage d'un objet original d'un premier type contenant du bruit pour obtenir un objet débruité dudit premier type ;
- une unité d'obtention d'un objet de bruit quasi blanc du premier type à partir d'une différence entre l'objet original et l'objet débruité ;
- une unité d'application à l'objet débruité d'un premier traitement comprenant un traitement à voisinage transformant les valeurs d'un élément d'objet en fonction des valeurs d'éléments d'objet voisins pour obtenir un objet transformé d'un deuxième type, le premier traitement étant tel qu'il aurait pour effet de structurer le bruit contenu dans l'objet original s'il était appliqué audit objet original ;

- une unité d'application à l'objet de bruit un deuxième traitement blanc pour obtenir un objet de bruit transformé quasi blanc du deuxième type ; et
- une unité d'introduction dans l'objet transformé de l'objet de bruit transformé.

Ce système peut en outre comprendre des moyens de capture d'image et/ou des moyens de restitution d'image.

L'invention propose aussi un produit programme d'ordinateur comprenant des instructions de code adaptées pour mettre en oeuvre le procédé susmentionné, lorsqu'il est chargé et exécuté sur des moyens informatiques.

D'autres particularités et avantages de la présente invention apparaîtront dans la description ci-après d'exemples de réalisation non limitatifs, en référence aux dessins annexés, dans lesquels :
- la figure 1 est un schéma montrant les principales étapes d'un traitement d'objet numérique selon l'invention ;
- la figure 2 est un schéma montrant les étapes d'un traitement d'objet numérique selon un mode de réalisation particulier de l'invention relatif à une application de dématriçage.
- la figure 3 est un schéma montrant les étapes d'un traitement d'objet numérique selon un mode de réalisation particulier de l'invention relatif à une application de déflouage.
- la figure 4 est un schéma montrant les étapes d'un traitement d'objet numérique selon un mode de réalisation particulier de l'invention relatif à une application de déplacement.

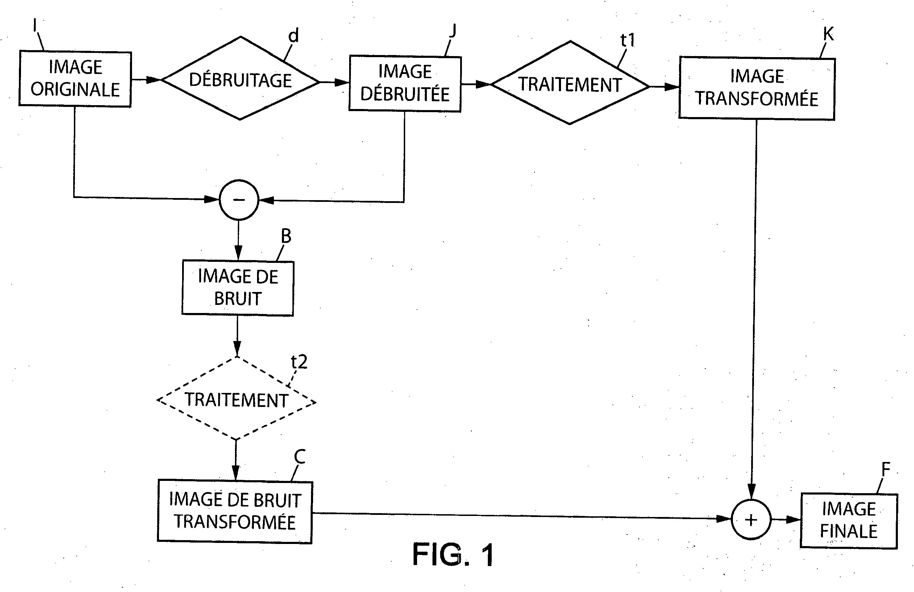

L'invention va d'abord être décrite dans sa généralité en référence à la figure 1. Dans cette description, on a fait l'hypothèse que les objets numériques manipulés étaient des images numériques. Toutefois, on comprendra que l'invention s'applique également à toute autre sorte d'objet numérique mentionnée en introduction.

On dispose d'une image numérique originale I, qui peut être de toute sorte et de toutes dimensions.

Par image numérique, on entend une image sous forme numérique. L'image peut être issue d'un système d'acquisition d'images numériques tel qu'évoqué en introduction. L'image peut être une image fixe ou animée, une image d'une séquence vidéo avant prise de vue ou une image destinée à être transmise ou conservée.

L'image numérique peut être représentée par un ensemble de valeurs numériques, appelées niveaux de gris, chaque valeur numérique étant associée à une sensibilité en couleur et une position géométrique relative sur une surface ou un volume. On appelle couleur, l'ensemble des valeurs numériques associées à la même sensibilité en couleur.

L'image numérique peut être l'image brute directement issue du capteur (image RAW) avant opération de dématriçage. L'image numérique peut également avoir subi un traitement, par exemple un dématriçage, une balance des blancs, un sous-échantillonnage ou autre.

On considère, plus généralement, que l'image originale I est d'un premier type. De ce fait, elle comporte certains attributs caractéristiques de ce premier type d'image, par exemple en ce qui concerne la couleur, la géométrie, la netteté, etc.

Cette image originale I est débruitée à l'aide d'un algorithme de débruitage d pour obtenir une image débruitée J. L'algorithme de débruitage d utilisé peut être n'importe quel algorithme de débruitage connu. Il est cependant choisi pour ne pas modifier le type de l'image à laquelle il est appliqué. Autrement dit, l'image débruitée J obtenu à l'aide de l'algorithme de débruitage est du premier type, comme l'image originale I. Elle comporte donc les mêmes attributs que l'image originale I.

L'algorithme de débruitage d peut par exemple opérer en définissant chaque pixel de l'image débruitée J comme une moyenne pondérée du pixel correspondant de l'image originale I ainsi que de ses voisins. Un tel moyennage réduit en effet la variance du bruit.

A titre d'exemples non limitatifs d'algorithmes de débruitage d, on peut citer le Sigma-filter, le filtre bilatéral ou encore le NL-mean.

Le Sigma-filter réalise une moyenne pondérée dans laquelle les poids sont une fonction décroissante des différences de niveaux de gris avec le pixel à débruiter. Il est décrit dans l'article de J.-S. Lee, "Digital image smoothing and the sigma filter", Computer Vision, Graphics and Image Processing, 24:255-269, 1983.

Dans le filtre bilatéral, les poids utilisés dans la pondération de la moyenne sont une fonction décroissante des différences de niveaux de gris avec le pixel à débruiter et de la distance à ce pixel. Cette méthode de débruitage est décrite dans l'article de S.M. Smith et J.M. Brady. SUSAN, "A new approach to low level image processing", International Journal of Computer Vision, 23(1):45-78, Mai 1997, ou encore dans l'article de C. Tomasi et R. Manduchi, "Bilateral Filtering for Gray and Color Images", Proceedings of the 1998 IEEE International Conference on Computer Vision, Bombay, Inde.

Le NL-mean, quant à lui, met en oeuvre une pondération de la moyenne dans laquelle les poids sont une fonction décroissante d'une distance entre un contexte du point à débruiter et de son voisin. Il est décrit par exemple dans l'article de A. Buades, B. Coll et J.M. Morel, "A review of image denoising algorithms, with a new one", Multiscale Modeling and Simulation (SIAM interdisciplinary journal), Vol 4 (2), pp: 490-530, 2005.

Un traitement t1 est ensuite appliqué à l'image débruitée J pour obtenir une image transformée K. Le traitement t1 est tel qu'il aurait pour effet de structurer le bruit contenu dans l'image originale I s'il était appliqué à cette image originale I. Il comprend un traitement à voisinage tel que défini en introduction. Des exemples de traitement t1 seront examinés ultérieurement.

On note que l'application du traitement t1 à l'image débruitée J plutôt qu'à l'image originale I vise précisément à éviter une structuration du bruit contenu dans l'image originale. Le bruit contenu dans l'image J étant limité par l'effet de l'algorithme de débruitage d, l'image transformée K ne souffre pas des inconvénients rappelés en introduction, notamment de la présence visible de structures de bruit disgracieuses. L'image transformée K possède un grain numérique plus grossier que l'image originale I, mais d'amplitude limitée.

Les pixels de l'image transformée K ne sont pas nécessairement du même genre que ceux de l'image débruitée J. En particulier, ils peuvent présenter un nombre de canaux différents de ceux de l'image J.

Plus généralement, le premier traitement t1 peut avoir pour effet de modifier le type de l'image à laquelle il est appliqué. Ainsi, l'image transformée K est d'un deuxième type qui peut différer du premier type. De ce fait, l'image transformée K peut comprendre un ou plusieurs attributs distincts de ceux de l'image originale I, comme la couleur et/ou la géométrie et/ou la netteté, etc.

Par ailleurs, une image de bruit quasi blanche est obtenue à partir d'une différence entre l'image originale I et l'image débruitée J. De par le mode opératoire de tout algorithme de débruitage d, l'image de bruit obtenue contient, outre du bruit, des informations utiles de l'image originale I dont l'image débruitée J a été privée. Ces informations utiles contiennent notamment des structures fines de l'image originale I, comme la texture d'une surface ou d'une peau par exemple.

Le fait que l'image de bruit obtenue soit quasi blanche indique que les informations élémentaires en une position quelconque de cette image de bruit sont décorrélées ou faiblement corrélées avec les informations élémentaires de cette même image en des positions voisines. On évite ainsi une corrélation qui structurerait le bruit à ce stade.

Par ailleurs, l'image de bruit obtenue est du même type que l'image originale I, c'est-à-dire du premier type. Elle comporte donc les mêmes attributs que l'image originale I.

Cette image de bruit subit un traitement t2. On obtient alors une image de bruit transformée C. Le traitement t2 est un traitement blanc, qui transforme donc un objet quasi blanc en un objet quasi blanc. Ainsi, puisque l'image de bruit obtenue à partir de la différence entre l'image originale I et l'image débruitée J est quasi blanche, il en est de même pour l'image de bruit transformée C. De cette façon, le bruit n'est pas ou peu structuré ou corrélé, et les effets visibles indésirables du bruit peuvent être limités.

De plus, le traitement blanc t2 modifie le type de l'image à laquelle il est appliquée de la même façon que le traitement t1. Ainsi, lorsqu'il est appliqué à l'image de bruit du premier type, il permet d'obtenir une image de bruit transformé C du deuxième type. L'image de bruit transformé C présente ainsi les mêmes attributs que l'image transformée K.

Divers exemples de traitement blanc t2 peuvent être envisagés, dont certains seront évoqués plus loin.

Par l'effet du traitement blanc t2, chaque pixel de l'image de bruit transformée C peut se voir associer une ou plusieurs valeurs qui dépendent d'un ou plusieurs quelconques parmi : une valeur associée à au moins un pixel correspondant de l'image de bruit, une valeur associée à au moins un pixel correspondant de l'image originale I, une valeur associée à au moins un pixel correspondant de l'image débruitée J, une valeur associée à au moins un pixel correspondant de l'image transformée K et un ou plusieurs paramètres exogènes.

Dans le cas des paramètres exogènes, ceux-ci peuvent être fixés par un utilisateur. En variante, ils peuvent être indépendants de tout utilisateur, par exemple lorsqu'ils correspondent à une valeur de focale, à une ouverture d'objectif, à une distance de mise au point, à toute caractéristique de la caméra, etc. La notion de paramètre exogène également appelé caractéristique variable est décrite en détail dans le document WO 03/007239.

On note que, du fait de la séparation préalable de l'image originale I contenant l'information utile et du bruit, la mise en oeuvre du traitement blanc t2 n'engendre pas de dégradation de l'image. On peut donc utiliser des traitements blancs t2 très efficaces vis-à-vis du bruit et qui n'auraient pas pu être mis en oeuvre directement sur l'image originale I.

L'image de bruit transformée C est ensuite introduite dans l'image transformée K, pour obtenir une image finale F. Cette introduction peut comprendre un ajout de l'image de bruit transformée C à l'image transformée K. En variante ou en complément, cette introduction peut comprendre une multiplication de l'image transformée K par l'image de bruit transformée C.

Cette introduction de l'image de bruit transformée C est rendue possible et aisée par le fait que cette image est du même type (deuxième type) que l'image transformée K. Les attributs de l'image de bruit transformée C et l'image transformée K étant les mêmes, leur combinaison est naturelle et donne une image finale F cohérente.

En outre, l'introduction de l'image de bruit transformée C dans l'image transformée K permet de réintroduire dans l'image finale F les structures fines de l'image originale I qui avaient été gommées lors du débruitage d. L'effet visuel rendu par une telle image finale F est donc meilleur et plus réaliste que celui de l'image transformée K.

Le grain de cette image finale F est en outre de taille limitée, par exemple du même ordre que pour l'image originale I.

On obtient ainsi une image finale F dont le bruit n'a pas été excessivement structuré par le traitement t1, grâce au débruitage d réalisé en amont, et qui contient néanmoins les structures fines de l'image que le débruitage d avait supprimées.

Plus généralement, on peut dire que dans l'image finale F, le bruit est maîtrisé sans perte excessive d'information utile.

L'image originale I, l'image débruitée J et l'image de bruit B correspondent donc à des objets du premier type. L'image transformée K et l'image de bruit transformée C correspondent à des objets du deuxième type, de sorte que l'on peut introduire l'image de bruit transformée C dans l'image transformée K pour obtenir l'image finale F. Dans une réalisation, ledit premier type et ledit deuxième type correspondent à des objets ayant au moins un attribut parmi la couleur, la géométrie et la netteté, qui diffère entre eux, et le premier traitement t1 et le deuxième traitement t2 ont pour effet de modifier ledit attribut relativement à l'objet débruité J et à l'objet de bruit respectivement pour obtenir des objets de deuxième type en partant d'objets de premier type.

Un résultat similaire serait obtenu si on s'intéressait à des objets numériques, autres que des images.

Divers exemples non limitatifs de réalisation et de mise en oeuvre de l'invention vont désormais être décrits. Ceux-ci peuvent avantageusement être combinés entre eux de toute manière envisageable, dans le respect des principes généraux qui viennent d'être exposés.

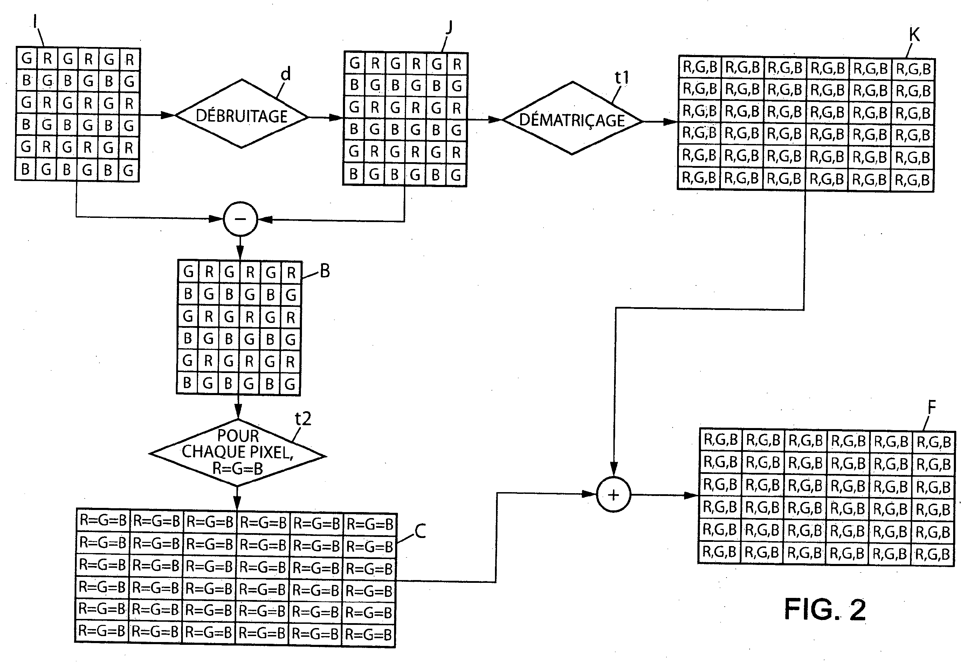

Dans une réalisation illustrée sur la figure 2, l'objet ou image originale, l'objet débruité et l'objet de bruit sont des images RAW Bayer correspondant à des objets ayant pour attribut couleur « couleur raw Bayer » correspondant à l'organisation des informations élémentaires en carrés de 4 pixels G, R et B tels que décrits plus bas. En variante de réalisation, l'image originale, l'image débruitée et l'image de bruit sont des images RAW ayant d'autres organisations des pixels (par exemple panchromatique avec des pixels blancs, rouge, vert et bleu) correspondant à d'autres types d'objets avec d'autres attributs couleur. En variante de réalisation, l'image originale, l'image débruitée et l'image de bruit sont des images RGB ou YUV420 ou YUV422 correspondant à d'autres types d'objets avec d'autres attributs couleur « couleur RGB », « couleur YUV420 » et « couleur YUV422 ». De même l'objet transformé et l'objet de bruit transformé peuvent être de divers types, et avoir divers attributs couleur par exemple l'attribut « couleur RGB ». L'attribut couleur peut donc par exemple correspondre à un ou plusieurs critères relatifs à la couleur représentée par chaque information élémentaire.

Dans l'exemple de la figure 2 les attributs couleur du premier type et du deuxième type sont différents et les premier et deuxième traitements t1 et t2 modifient l'attribut couleur. Le premier type a pour attribut couleur « couleur raw Bayer ». Le deuxième type a pour attribut couleur « couleur RGB ».

Dans l'exemple illustré sur la figure 2, l'image originale I est une image RAW issue d'un capteur muni d'un réseau de filtres colorés ne permettant de mesurer la lumière que sur une gamme de longueurs d'onde dans chaque pixel. Aux fins de cet exemple, l'image RAW considérée est issue d'un réseau de Bayer conformément à ce qui est décrit dans US 3,971,065. Bien sûr, d'autres sortes d'images RAW, telles que des images issues d'un capteur monochrome, d'une pluralité de réseaux de Bayer interlacés, etc. pourraient servir d'image originale. Cette image RAW I est formée d'ensembles carrés de quatre pixels dont deux pixels n'ayant pas d'arête en commun reçoivent des valeurs respectives dans la gamme de longueurs d'onde du vert (pixels notés "G"), un pixel reçoit une valeur dans la gamme de longueurs d'onde du rouge (pixel noté "R") et le dernier pixel reçoit une valeur dans la gamme de longueurs d'onde du bleu (pixel noté "B").

Un débruitage d préservant la structure de filtres colorés est appliqué à l'image RAW I pour obtenir une image débruitée J de même type que I (c'est-à-dire également organisée en réseau de Bayer).

Le traitement t1 appliqué à l'image débruitée J est une opération de dématriçage. Ce dématriçage permet de reconstruire plusieurs valeurs par pixel. Dans l'exemple illustré, on obtient donc une image transformée K dont chaque pixel se voit allouer un triplet de valeurs (R,G,B) correspondant chacune a un des canaux rouge, vert et bleu. Les pixels de l'image K possèdent donc trois fois plus de valeurs que l'image RAW I ou encore que l'image débruitée J. Contrairement à l'image RAW I, l'image transformée K est ainsi une image en couleurs. Cette image transformée K est donc d'un type différent de l'image RAW I, notamment en ce qui concerne l'attribut relatif à la couleur (organisation en trois plans R,G,B, plutôt qu'en réseau de Bayer).

Le dématriçage est un traitement à voisinage qui aurait pour effet de structurer le bruit s'il était appliqué à une image bruitée. En effet, pour retrouver par exemple les valeurs correspondant aux canaux R et B pour un pixel donné à partir d'une valeur correspondant au canal G pour ce pixel, il effectue une interpolation tenant compte respectivement des valeurs correspondant aux canaux R et B associées à des pixels proches dudit pixel.

Du fait du débruitage d préalable, cette opération ne crée pas de corrélation similaire dans le bruit contenu dans l'image originale I.

Par ailleurs, une image de bruit B est définie comme la différence de l'image RAW I et de l'image débruitée J. Comme I et J, l'image B contient une valeur par pixel correspondant à un seul des trois canaux R, G et B. L'image de bruit B est donc du même type que les images I et J. Elle est en outre une image quasi blanche, puisqu'il n'existe pas ou peu de corrélation entre les informations élémentaires qu'elle contient à des positions voisines.

Un traitement t2 est alors appliqué à l'image de bruit B pour obtenir une image de bruit transformée C. Le traitement t2 envisagé dans cet exemple pour obtenir un objet de deuxième type consiste à déterminer, pour chaque pixel, les valeurs correspondant aux deux canaux manquants. Par exemple, ces valeurs peuvent être prises égales à la valeur connue. Autrement dit, un pixel de l'image de bruit B ayant une valeur correspondant au canal vert, se verra affecter, dans l'image C, de valeurs additionnelles identiques pour les canaux rouge et bleu. Ainsi, à chaque pixel de l'image de bruit transformée C sont associées trois valeurs R=G=B pour les trois canaux considérés dans cet exemple. Cette égalisation des canaux a pour conséquence de rendre le bruit gris, aucune couleur ne se démarquant des autres, ce qui rend le bruit plus agréable à l'oeil. Bien sûr, d'autres traitements blancs t2 sont possibles et notamment d'autres valeurs pourraient être définies pour les canaux manquants, en référence à la valeur connue.

On note que, dans cet exemple, les valeurs associées à un pixel donné de l'image de bruit C ne dépendent que de la valeur associée au pixel de même position dans l'image de bruit B. Autrement dit, le traitement t2 est un traitement blanc dans la mesure où il conserve le caractère quasi blanc de l'image de bruit B.

De plus, l'image de bruit transformée C obtenue est du même type que l'image transformée K, puisqu'il s'agit d'une image en couleurs dont chaque pixel est associé à un triplet de valeurs (R,G,B).

L'image C est enfin introduite dans l'image K, ces images étant de même type, c'est-à-dire ayant le même nombre de valeurs par pixel. Ceci permet d'obtenir une image finale F en couleurs. Le grain numérique de cette image K est relativement fin et, en tout cas, de taille identique ou proche de celle du grain de l'image RAW I, du fait que le dématriçage t1 est intervenu après débruitage d de l'image RAW I. De plus, les structures fines de l'image RAW atténuées ou même supprimées par le débruitage d sont retrouvées grâce à la réintroduction du bruit C dans l'image finale F. En outre, le fait que le bruit ait été traité pour apparaître gris le rend particulièrement discret dans l'image finale F.

D'autres exemples non limitatifs de traitements t1 susceptibles d'être appliqués à l'image débruitée J et pouvant être combinés de toute façon envisageable, dans le respect des principes généraux de l'invention exposés plus haut, sont donnés ci-après.

L'attribut netteté correspond par exemple à caractériser la quantité de flou introduite par l'appareil ayant servi à capturer et par les traitements appliqués pour obtenir une image à partir d'une scène.

Par exemple, la netteté peut correspondre à la mesure d'une valeur dénommée BXU qui est une mesure de la surface de tache de flou, telle que décrite dans l'article publié dans les « Proceedings of IEEE, International Conference of Image Processing, Singapore 2004 », et intitulé « Uniqueness of Blur Measure » de Jérôme BUZZI et Frédéric GUICHARD.

De façon simplifiée, le flou d'un système optique se mesure à partir de l'image, appelée « réponse impulsionelle », d'un point infiniment petit situé dans le plan de netteté. Le paramètre BXU est la variance de la réponse impulsionelle (c'est-à-dire sa surface moyenne).

Ainsi l'attribut netteté peut par exemple se définir par un critère à respecter pour le BXU en au moins une zone de l'image et pour au moins une valeur de paramètre exogène telle la focale. Ainsi « netteté BXU ≤ 4 partout dans l'image » ou « netteté BXU ≤ 2 partout dans l'image » ou « netteté BXU ≤ 0,5 ou 2 ≤ BXU ≤ 3 partout dans l'image » sont des exemples d'attributs de netteté. L'attribut de netteté peut aussi se définir avec d'autres critères mettant en oeuvre par exemple une mesure de diverses aberrations optiques.

Dans une réalisation, l'objet ou image originale, l'objet débruité et l'objet de bruit sont des images RAW correspondant à des objets ayant pour attribut netteté « netteté raw de la camera C1 » correspondant à un certain niveau de flou tenant compte du flou introduit par l'optique et le capteur lors de l'acquisition de l'image originale. Il est à noter que l'attribut flou peut dépendre de paramètres exogènes comme la position dans l'image ou la focale de l'optique ou la couleur. En variante de réalisation, l'image originale, l'image débruitée et l'image de bruit sont des images RAW ayant d'autres organisations des pixels (par exemple panchromatique avec des pixels blancs, rouge, vert et bleu) correspondant à d'autres types d'objets avec d'autres attributs netteté. En variante de réalisation, l'image originale, l'image débruitée et l'image de bruit sont des images RGB ou YUV420 ou YUV422 ou G correspondant à d'autres types d'objets avec d'autres attributs netteté correspondant au niveau de netteté compte tenu des traitements réalisés pour obtenir ces images. De même l'objet transformé et l'objet de bruit transformé peuvent être de divers types, et avoir divers attributs netteté par exemple l'attribut « netteté raw de la camera C1 augmentée de 2 BxU ». En pratique l'attribut de netteté peut tenir compte d'une netteté variable en fonction de la position dans l'image ou en fonction de paramètres exogènes comme la position dans l'image ou la focale de l'optique ou la couleur.

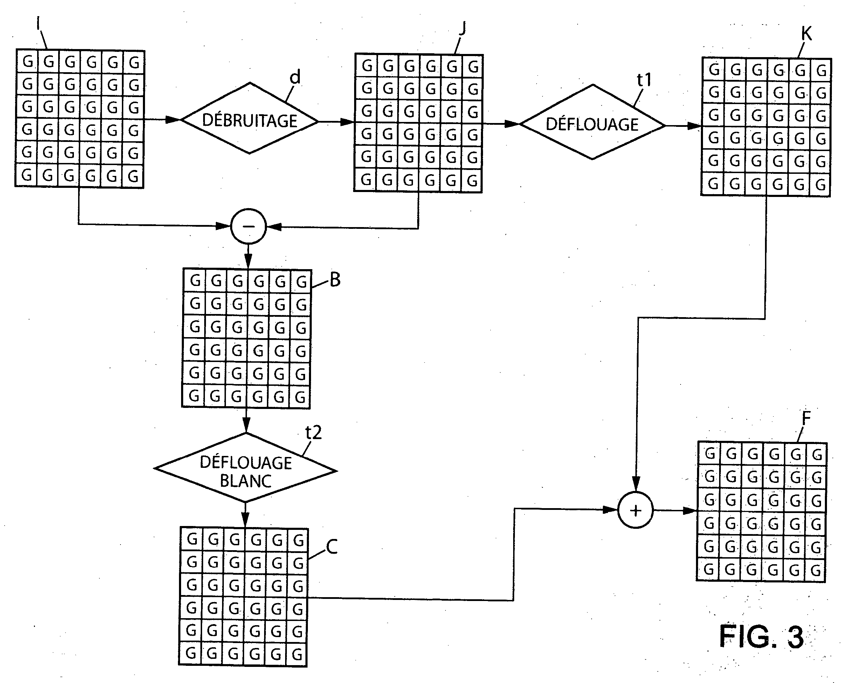

Sur la figure 3, on a représenté un exemple de réalisation de l'invention dans lequel, les attributs netteté du premier type et du deuxième type sont différents et les premier et deuxième traitements t1 et t2 modifient l'attribut netteté. Le premier type a pour attribut netteté « netteté camera C1 » correspondant à la netteté obtenue par la prise de vue de l'image originale par la caméra C1. Le deuxième type a pour attribut netteté « netteté BXU ≤ 1,5 ». Les images sont des images d'attribut couleur « couleur G » où tous les pixels ont la même couleur G.

Le traitement t1 appliqué à une partie au moins de l'image débruitée J peut par exemple comprendre une opération de déflouage ("deblurring" en anglais). Une telle opération a pour objet de rendre une image numérique visuellement plus nette, à l'aide de filtres. Schématiquement, elle accentue les variations d'intensité lumineuse entre des pixels voisins. Il s'agit donc d'un traitement à voisinage qui aurait pour effet de structurer le bruit s'il était appliqué à une image bruitée, car la même accentuation des variations d'intensité s'appliquerait au bruit lui-même.

Un tel déflouage peut être appliqué à l'image débruitée J alors que l'image originale I était une image contenant un seul canal ou bien une image contenant plusieurs canaux. L'image I peut même éventuellement être le résultat d'un certain nombre de traitements préalables.

L'attribut géométrie correspond par exemple à des critères à respecter pour le déplacement par rapport à une projection de référence sur un plan ; le déplacement provenant de l'appareil de capture dont son optique et par les traitements appliqués pour obtenir une image à partir d'une scène. L'attribut géométrie peut aussi se définir à l'aide de critères relatifs à d'autres valeurs.

L'attribut géométrie peut par exemple se définir par un critère à respecter pour le déplacement en au moins une zone de l'image et pour au moins un paramètre exogène tel que la focale. Ainsi «géométrie d²/60000 ≤ depl ≤ d²/40000 partout dans l'image » ou « géométrie d²/200000 ≤ depl ≤ d²/100000 partout dans l'image » sont des exemples d'attributs géométrie où d représente la distance en pixel au centre de l'image et depl représente le déplacement par rapport à la projection de référence.

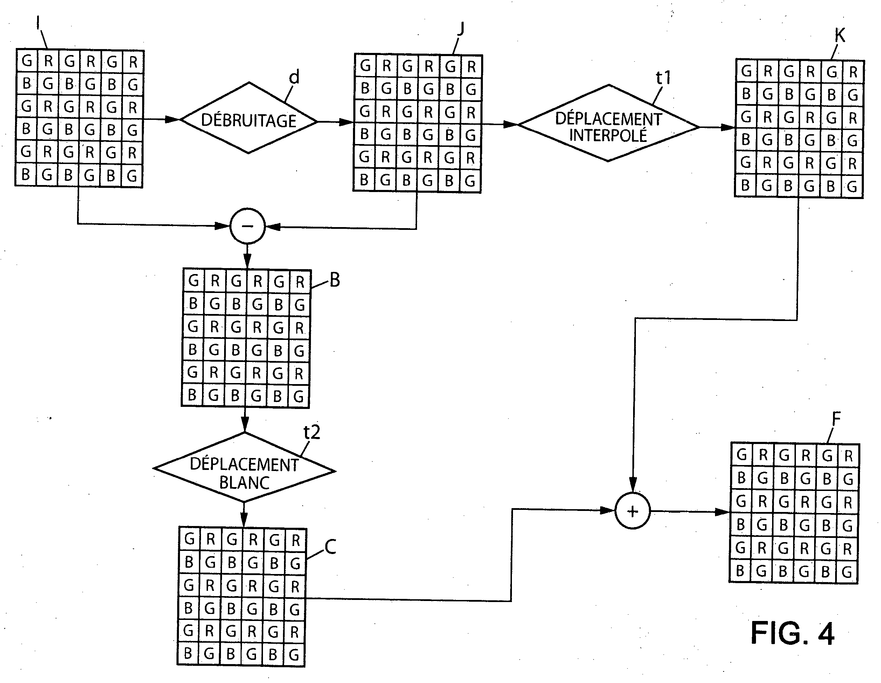

Dans une réalisation représentée sur la figure 4, l'objet ou image originale, l'objet débruité et l'objet de bruit sont des images RAW Bayer correspondant à des objets ayant pour attribut géométrie « géométrie raw Bayer caméra C1 » correpondant à la déformation liée aux aberrations chromatiques latérales et à la distortion introduites par l'optique lors de la prise de vue de l'image originale. Il est à noter que la déformation peut dépendre de la position dans l'image et de paramètres tels que la focale ou la mise au point. En variante de réalisation, l'image originale, l'image débruitée et l'image de bruit sont des images RAW ayant d'autres organisations des pixels (par exemple panchromatique avec des pixels blancs, rouge, vert et bleu) correspondant à d'autres types d'objets avec d'autres attributs géométrie. En variante de réalisation, l'image originale, l'image débruitée et l'image de bruit sont des images RGB ou YUV420 ou YUV422 correspondant à d'autres types d'objets avec d'autres attributs géométrie. De même l'objet transformé et l'objet de bruit transformé peuvent être de divers types, et avoir divers attributs géométrie par exemple l'attribut « géométrie raw Bayer camera C1 corrigé de la distortion » ou « géométrie raw Bayer camera C1 avec un changement d'échelle de 1.1 centré » ou « géométrie raw Bayer avec depl < 1 pixel ».

Sur la figure 4, on a représenté un exemple de réalisation de l'invention dans lequel les attributs géométrie du premier type et du deuxième type sont différents et les premier et deuxième traitements t1 et t2 modifient l'attribut géométrie. Le premier type a pour attribut géométrie « géométrie camera C1 » correspondant à la géométrie obtenue par la prise de vue de l'image originale par la caméra C1. Le deuxième type a pour attribut géométrie « géométrie déplacement ≤ 1,0 ». Les images sont des images d'attribut couleur « couleur raw Bayer ». Le traitement t1 effectue par exemple un déplacement d'un nombre non entier de pixels par interpolation subpixelique. Le traitement t2 fait par exemple un déplacement d'un nombre pair de pixels ou le traitement t2 fait par exemple un déplacement d'un nombre entier de pixels.

Dans une variante, le premier traitement t1 et le deuxième traitement t2 comprennent la modification de plusieurs attributs par exemple couleur puis netteté sur au moins une couleur ou par exemple géométrie puis couleur puis netteté sur au moins une couleur. Ceci présente l'avantage de ne réaliser qu'une seule opération de débruitage et cela permet de faire les traitements t1 et t2 de préférence sur des images ayant un attribut couleur « couleur raw Bayer » ce qui diminue les calculs car la quantité de données est 3 fois moins importante que pour une image d'attribut couleur « couleur RGB ».

Selon un autre exemple, le traitement t1 comprend une déformation d'une partie au moins de l'image débruitée J. Cette déformation peut comprendre par exemple un changement d'échelle (e.g. un "zoom"), une correction de distorsion qui restaure leur caractère rectiligne aux droites de l'image, une rotation, une correction de parallaxe, une correction du phénomène de Moiré (apparition de franges colorées dans l'image qui se produit lorsqu'il existe des hautes fréquences spatiales et qui se corrige par le paramétrage de filtres anti-alias), ou encore une correction de perspective.

Un tel traitement constitue un traitement à voisinage qui aurait pour effet de structurer le bruit s'il était appliqué à une image bruitée. Il conduit en effet à interpoler des valeurs pour certains pixels qui ne s'en sont pas vus affectés du fait d'un changement d'échelle ou d'un déplacement relatif des pixels d'une fraction non entière de pixel.

Selon un autre exemple, le traitement t1 comprend une correction d'aberration chromatique latérale qui vise à corriger le phénomène selon lequel toutes les longueurs d'onde ne sont pas réfractées de la même façon par la lentille d'une caméra. Sur le bord d'une image en couleurs, il est en effet possible que les canaux correspondant à chaque couleur soient totalement séparés. Le traitement t1 peut alors avoir pour principe d'appliquer une déformation différente sur chacun des canaux de l'image.

Selon un autre exemple, le traitement t1 comprend un recalage sub-pixelique d'image composant l'image débruitée J, qui impose d'interpoler des valeurs intermédiaires. Un tel traitement peut être vu comme un ré-échantillonnage de l'image débruitée J.

Selon un autre exemple encore, le traitement t1 appliqué à l'image débruitée J peut être un traitement multi-échelle. Dans ce cas, l'image débruitée J résulte d'un sous-échantillonnage de l'image originale I et peut ainsi être vue comme un ensemble d'images j à différentes résolutions. A titre illustratif, l'image débruitée J pourrait comprendre deux images j incluant chacune seulement une moitié de pixels, comparé à l'image originale I. De la même façon, on peut obtenir un ensemble d'images de bruit c ayant chacune la même taille que l'image j correspondante. Cet exemple peut être vu comme une mise en oeuvre récursive du procédé décrit plus haut.

Selon un autre exemple, le traitement t1 appliqué à l'image débruitée J peut comprendre une compression/décompression qui créerait des artéfacts s'il était appliqué à l'image originale bruitée I. Si cela est approprié, une compression/décompression différente pourra éventuellement être appliquée à l'image de bruit. Dans ce cas les attributs de l'image corrigée comprennent une description de l'impact de la compression/décompression par exemple sur les autres fréquences de manière que le type de l'image corrigée et l'image de bruit corrigée soient les mêmes.

Selon un autre exemple, le traitement t1 appliqué à une partie au moins de l'image débruitée J peut comprendre une transformation de couleurs (e.g. en sépia).

Selon un autre exemple où l'objet débruité J consiste en la combinaison d'une pluralité d'images j, le traitement t1 peut s'appliquer à tout ou partie de ces images j. C'est le cas par exemple lorsqu'on utilise la technique HDR ("High Dynamic Range") qui permet d'obtenir plusieurs images d'une même scène, avec des paramètres de prise de vue différents (par exemple le temps de pose, l'ouverture du diaphragme, etc.), et d'augmenter ainsi artificiellement la dynamique, c'est-à-dire la capacité de codage, des capteurs. Une combinaison similaire peut par ailleurs être nécessaire pour retrouver une image de bruit unique à partir d'une pluralité d'images de bruit résultant du débruitage de l'image originale I.

Certains traitements t1 peuvent à la fois structurer et amplifier le bruit.

A titre d'exemple, on peut citer la simulation du grain d'une pellicule pour donner à l'image débruitée J l'aspect d'une photographie argentique, avec par exemple un effet "rétro".

Si l'invention est appliquée à des objets, autres que des images numériques bidimensionnelles, des traitements t1 adaptés à la nature de ces objets peuvent être mis en oeuvre.

A titre illustratif, si l'objet original est une série d'images extraites d'un film, l'objet débruité J peut être vu comme une image à deux dimensions spatiales et une dimension temporelle. Le traitement t1 peut alors être une compression vidéo qui découpe une image en blocs qui n'ont aucune existence dans la scène filmée. Le rajout de l'image de bruit transformée a tendance à masquer les effets de blocs et rend le film bien plus agréable.

Pour plus de détails sur les traitements susmentionnés ou pour d'autres exemples de traitements utilisables, on pourra se reporter notamment à EP02751241.7, EP02743349.9, EP02747504.5, EP02748934.3, EP02743348.1, EP02748933.5, EP02747503.7, EP02747506.0, EP02745485.9 ou PCT/FR2004/050455.

En plus du traitement t1 qui s'applique à l'image débruitée J et dont différents exemples ont été décrits ci-dessus, on applique un traitement t2 à l'image de bruit B. Un exemple de traitement t2 a déjà été décrit en référence à la figure 2 dans le cadre du dématriçage d'une image numérique. D'autres exemples non limitatifs et pouvant être combinés de toute façon envisageable, entre eux et/ou en relation avec un traitement t1 appliqué à l'image débruitée J, dans le respect des principes généraux de l'invention exposés plus haut, sont décrits ci-après.

Le traitement blanc t2, lorsqu'il est mis en oeuvre, peut avantageusement comprendre une modification de l'image de bruit B qui conserve la taille du bruit et donc du grain numérique.

En particulier, on peut atténuer l'intensité du bruit dans l'image B, sans risque d'atténuer de la même façon les informations utiles de l'image originale I puisque le bruit en a été extrait par l'action du débruitage d.

La hauteur de l'atténuation appliquée à chaque pixel de l'image de bruit B peut dépendre d'un paramètre exogène. Ce paramètre peut être fixé par un utilisateur. Celui-ci peut par exemple choisir d'atténuer de 10% la ou les valeurs associées à chaque pixel de l'image de bruit B.

L'atténuation peut également varier selon les pixels de l'image de bruit B. A titre illustratif, on pourrait décider d'appliquer une atténuation du bruit de 30%, 40% et 50% respectivement pour les pixels de l'image de bruit B qui correspondent à des pixels de l'image originale I ou de l'image débruitée J qui sont dans des tons sombres, intermédiaires ("mid-tones" en anglais) et clairs. En variante ou en complément, l'atténuation peut varier selon les pixels de l'image de bruit B en fonction des couleurs des pixels correspondants au sein de l'image originale I ou de l'image débruitée J.

Dans ce schéma, on peut considérer qu'un pixel de l'image de bruit B correspond à un pixel de l'image originale I ou de l'image débruitée J si ces deux pixels ont la même position au sein de l'image à laquelle ils appartiennent respectivement. En variante, plusieurs pixels de l'image originale I ou de l'image débruitée J pourraient correspondre à un pixel de l'image de bruit B : par exemple le pixel de I ou J de même position que le pixel de B, ainsi que ses voisins. La correspondance entre les pixels peut alors se faire selon un critère de position. Selon une autre variante encore, la correspondance pourrait se faire à partir de contextes: par exemple, des pixels de I ou J et de B pourraient se correspondre s'ils appartiennent à un même objet, s'ils sont relatifs à une même texture, s'ils présentent une même gamme de couleurs, etc.

Selon un autre exemple, le traitement blanc t2 utilisé peut comprendre une modification du bruit pour en modifier les couleurs.

Ainsi, si l'image originale I considérée est une image en couleurs pour laquelle trois valeurs (R,G,B) sont disponibles en chaque pixel, l'image de bruit B, qui est de même type que I, peut être modifiée pour qu'en certains au moins de ses pixels, les valeurs (R,G,B) présentent les mêmes rapports de valeurs R/G et B/G que dans les pixels correspondants de l'image I, J ou K.

Dans ce cas également, les valeurs associées à chaque pixel de l'image de bruit C dépendent donc de valeurs associées au pixel correspondant au sein de l'image de bruit B, et de l'image I, J ou K. La correspondance entre ces pixels peut être définie de façon variée, comme indiqué plus haut.

Un tel traitement permet d'obtenir une image de bruit transformée C qui présente sensiblement les mêmes couleurs que l'image I, J ou K. On évite ainsi la génération de tâches de couleurs inadéquates au sein de l'image finale F, après réintroduction finale du bruit dans l'image K, et la perception visuelle du bruit en est réduite.

En variante, une désaturation des couleurs de l'image de bruit B peut être mise en oeuvre. Pour ce faire, les valeurs (R,G,B) associées à chaque pixel de l'image de bruit B peuvent être rendues égales ou proches. Un tel traitement associe ainsi à chaque pixel de l'image de bruit C trois valeurs (R,G,B) qui dépendent d'au moins une des valeurs (R,G,B) associées au pixel correspondant de l'image de bruit B. Dans ce cas, contrairement à l'image de bruit B, l'image de bruit transformée C n'est plus en couleurs.

Si l'objet de bruit B correspond à un objet numérique autre qu'une image, des traitements t2 adaptés au type de cet objet pourront être utilisés.

Dans une réalisation, ledit premier type et ledit deuxième type correspondent à des objets ayant au moins un attribut parmi la couleur, la géométrie et la netteté, qui diffère entre eux, et le premier traitement t1 et le deuxième traitement t2 ont pour effet de modifier ledit attribut relativement à l'objet débruité J et à l'objet de bruit respectivement.

Dans tous les cas, on choisira un traitement t2 qui est blanc et qui modifie le type d'un objet de la même façon que le traitement t1.

Par exemple, si le traitement t1 modifie l'attribut de géométrie de l'image débruitée à laquelle il est appliqué, en la soumettant à une déformation géométrique déterminée telle qu'une distorsion, une aberration chromatique latérale, un changement d'échelle, une projection, ou autres, le traitement t2 choisi modifiera l'attribut de géométrie de l'image de bruit à laquelle il est appliqué, de façon identique ou similaire.

Prenons l'exemple illustré par la figure 4, de la modification de la géométrie d'une image numérique RAW. L'image numérique I est alors une image RAW, l'image résultante F aussi une image RAW.

Un traitement t1 est appliqué à l'image RAW débruitée J pour obtenir une image RAW transformée K. Le traitement t1 consiste à déterminer, la valeur de chaque pixel de K en fonction : d'une position non forcément entière dans l'image J (correspondant au changement de géométrie) et d'une interpolation des valeurs des pixels de l'image J au voisinage de cette position. Le traitement t1, pourra par exemple interpoler en utilisant une interpolation bicubique des valeurs de pixels de l'image J correspondant à la couleur du pixel traité de l'image K. (Rappelons que dans le cas d'une image RAW de type bayer, chaque pixel ne contient une valeur que pour une couleur). Mais, l'interpolation pourra tout aussi avantageusement impliquer les valeurs de pixels correspondant à des couleurs différentes. L'interpolation sera choisie de telle sorte à effectuer une modification de la géométrie qui évite au mieux les pertes d'informations et qui préserve au mieux la qualité visuelle de l'image K. Des méthodes plus complexes qu'une interpolation bi-cubique impliquant une ou plusieurs couleurs pourront être choisies.

Le traitement t1 est tel qu'il aurait pour effet de structurer le bruit contenu dans l'image originale I s'il était appliqué à cette image. Il comprend en effet un traitement à voisinage (l'interpolation) tel que défini en introduction. On note que l'application du traitement t1 à l'image débruitée J plutôt qu'à l'image originale I vise précisément à éviter une structuration du bruit contenu dans l'image originale. Notons aussi que les pixels de l'image transformée K ne sont pas nécessairement du même genre que ceux de l'image débruitée J ; puisque la géométrie de l'image a été modifiée par le traitement t1.

Le traitement t2 effectuera une modification de la géométrie de l'image de bruit B, en l'image C, en évitant au mieux la structuration du bruit. Par exemple, le traitement t2 pourra déterminer, la valeur de chaque pixel de C en fonction : d'une position non forcément entière dans l'image C (correspondant au même changement de géométrie que celui effectué par t1) et en prenant la valeur du pixel, de l'image B, le plus proche de cette position. Le traitement t2 ainsi défini est un traitement blanc dans la mesure où il conserve le caractère quasi blanc de l'image de bruit B. On pourra aussi en variante de réalisation, choisir pour t2 une interpolation impliquant un voisinage plus petit que le traitement t1 et maintenant le caractère quasi-blanc de l'image C.

De plus, l'image de bruit transformée C, ainsi obtenue, est du même type que l'image transformée K. L'image C est alors enfin introduite dans l'image K, permettant ainsi d'obtenir une image finale F, RAW, de géométrie corrigée et ayant un bruit quasi blanc.

Une telle variante du procédé permet donc de modifier la géométrie d'une image RAW tout en évitant de structurer son bruit.

Dans une variante avantageuse de l'exemple de la figure 4 s'appliquant à l'image RAW de type Bayer, le traitement t2 choisira ou interpolera les valeurs de pixels de l'image C à partir de valeurs de pixels de l'image B, sans tenir compte du caractère couleur de chaque pixel. C'est-à-dire que l'étape d'interpolation fonctionnera comme si les images B et C étaient des images d'un seul et même canal. Le traitement t2 pourra alors choisir ou interpoler des valeurs de pixels correspondant initialement à des couleurs différentes. Ainsi par le changement de géométrie, une valeur de l'image B d'un pixel par exemple « bleu » pourra se retrouver sur l'image C sur un pixel par exemple « vert ». L'avantage de cette variante est de permettre un déplacement sur une résolution supérieure à celle de chacun des canaux de couleurs de l'image RAW initiale. En effet, l'image B considérée comme un seul canal est deux fois plus résolues que chacun de ces 4 plans couleurs. Ainsi, le traitement t2 permettra d'obtenir un grain de taille inférieur à celui que l'on obtiendrait en considérant les quatre canaux séparément. Le traitement t2 peut changer la couleur du bruit, mais cela n'est pas gênant car cela ne structure pas le bruit et on pourra avantageusement rendre le bruit « gris » comme expliqué précédemment lors de l'étape de dématriçage.

De même, si comme dans l'exemple représenté sur la figure 3, le traitement t1 modifie l'attribut de netteté de l'image débruitée à laquelle il est appliqué, en la soumettant par exemple à un déflouage, le traitement t2 choisi modifiera l'attribut de netteté de l'image de bruit à laquelle il est appliqué, de façon identique ou similaire. Le traitement t2 pourra alors être une simple multiplication par un scalaire de l'image de bruit B. Le scalaire dépendant du niveau de déflouage effectué par le traitement t1. Par exemple, t1 pourra être choisi comme un déflouage au moyen d'une convolution. Le scalaire multiplicateur définissant t2, pourra alors être défini par la racine de la somme des carrés des coefficients de la convolution (norme L2). La multiplication par un scalaire, conserve le caractère quasi-blanc de l'image B. De plus, cela correspond à une modification de l'attribut de netteté compte tenu du caractère quasi-blanc de l'image de bruit B. Une telle variante du procédé permet donc de modifier la netteté d'une image numérique tout en évitant de structurer son bruit.

En variante, t2 est l'identité et l'image de bruit B et l'image de bruit modifiée C sont identiques. Ceci permet par exemple de simplifier les calculs dans le cas où l'image de bruit B est du premier type mais respecte aussi les critères du deuxième type, en particulier pour l'attribut netteté.

Bien sûr, des traitements t1 et/ou t2, autres que ceux qui ont été mentionnés plus haut, peuvent être mis en oeuvre dans le cadre de la présente invention, comme cela apparaîtra à l'homme du métier. Ces traitements peuvent en outre être adaptés en fonction du type d'objet numérique auquel ils s'appliquent respectivement.

Dans tous les cas, l'objet transformé peut être destiné à être stocké et/ou traité et/ou restitué par un système de restitution d'image (e.g. un écran, un projecteur, un téléviseur, des lunettes de réalité virtuelle, une imprimante, etc.).

L'invention propose aussi un système comprenant des unités pour mettre en oeuvre le procédé qui vient d'être décrit. Ce système comprend avantageusement un composant électronique intégrant des moyens logiciels et/ou matériels pour la mise en oeuvre du procédé. Il peut éventuellement comporter un capteur et/ou un imageur et/ou tous moyens de restitution d'image.

Ce système peut consister en un simple dispositif. C'est par exemple le cas lorsque l'ensemble des étapes décrites ci-dessus sont effectuées à l'aide d'une technologie embarquée, par exemple au sein d'un appareil photo ou d'un téléphone portable éventuellement muni d'un système de prise de vue tel qu'une caméra capable d'acquérir l'image originale I.

Alternativement, ce système peut être réparti entre différents dispositifs. Par exemple, une partie des opérations peut être mise en oeuvre au sein d'un premier dispositif, tandis qu'une autre partie des opérations serait mise en oeuvre au sein d'un deuxième dispositif.

De façon avantageuse, tout ou partie du procédé peut être réalisé à l'aide d'un programme d'ordinateur chargé et exécuté sur des moyens informatiques. Ainsi, un logiciel de traitement d'image numérique chargé sur un ordinateur par exemple peut, à partir d'un objet original, fournir un objet final selon les principes décrits plus haut.

## Revendications

1. Procédé de traitement d'objet numérique mis en oeuvre par ordinateur comprenant les étapes suivantes :
- débruiter un objet original (I) d'un premier type contenant du bruit pour obtenir un objet débruité (J) dudit premier type ;
- obtenir un objet de bruit quasi blanc du premier type à partir d'une différence (B) entre l'objet original et l'objet débruité ;
- appliquer à l'objet débruité (J) un premier traitement (t1) comprenant un traitement à voisinage transformant les valeurs d'un élément d'objet en fonction des valeurs d'éléments d'objet voisins pour obtenir un objet transformé (K) d'un deuxième type, le premier traitement étant tel qu'il aurait pour effet de structurer le bruit contenu dans l'objet original s'il était appliqué audit objet original ;
- appliquer à l'objet de bruit un deuxième traitement (t2) blanc, qui transforme un objet quasi blanc en un objet quasi blanc, pour obtenir un objet de bruit transformé (C) quasi blanc du deuxième type ; et
- introduire dans l'objet transformé (K) l'objet de bruit transformé.

2. Procédé selon la revendication 1, dans lequel l'un au moins parmi l'objet original, l'objet débruité, l'objet transformé, l'objet de bruit et l'objet de bruit transformé comprend une image numérique.

3. Procédé selon la revendication 1 ou 2, dans lequel ledit premier type et ledit deuxième type correspondent à des objets ayant au moins un attribut parmi la couleur, la géométrie et la netteté, qui diffère entre eux, et dans lequel le premier traitement (t1) et le deuxième traitement (t2) ont pour effet de modifier ledit attribut relativement à l'objet débruité (J) et à l'objet de bruit respectivement.

4. Procédé selon l'une quelconque des revendications précédentes, dans lequel l'objet original (I) est une image de type RAW.

5. Procédé selon l'une quelconque des revendications précédentes, dans lequel le premier traitement (t1) comprend un dématriçage de l'objet débruité (J).

6. Procédé selon l'une quelconque des revendications précédentes, dans lequel le premier traitement (t1) comprend un déflouage d'une partie au moins de l'objet débruité (J).

7. Procédé selon quelconque des revendications précédentes, dans lequel le premier traitement (t1) comprend une déformation d'une partie au moins de l'objet débruité (J).

8. Procédé selon l'une quelconque des revendications précédentes, dans lequel le deuxième traitement (t2) associe à chaque élément de l'objet de bruit au moins une valeur dépendant d'une valeur associée à au moins un élément correspondant de la différence (B) entre l'objet original (I) et l'objet débruité (J).

9. Procédé selon la revendication 8, dans lequel est associée à chaque élément de la différence (B) entre l'objet original (I) et l'objet débruité (J) une première valeur relative à un canal parmi une pluralité de canaux, et dans lequel le deuxième traitement (t2) associe à chaque élément de l'objet de bruit, en plus de ladite première valeur associée à l'élément correspondant au sein de la différence (B) entre l'objet original (I) et l'objet débruité (J), au moins une deuxième valeur relative respectivement à un autre canal de ladite pluralité, la deuxième valeur étant déterminée en référence à ladite première valeur.

10. Procédé selon l'une quelconque des revendications précédentes, dans lequel le deuxième traitement (t2) associe à chaque élément de l'objet de bruit au moins une valeur dépendant d'une valeur associée à au moins un élément correspondant d'au moins un objet parmi l'objet original (I), l'objet débruité (J) et l'objet transformé (K).

11. Procédé selon l'une quelconque des revendications précédentes, dans lequel le deuxième traitement (t2) associe à chaque élément de l'objet de bruit au moins une valeur dépendant d'au moins un paramètre exogène.

12. Système de traitement d'objet numérique agencé pour mettre en oeuvre le procédé selon l'une quelconque des revendications précédentes, le système comprenant :
- une unité de débruitage d'un objet original (I) d'un premier type contenant du bruit pour obtenir un objet débruité (J) dudit premier type ;
- une unité d'obtention d'un objet de bruit quasi blanc du premier type à partir d'une différence (B) entre l'objet original et l'objet débruité ;
- une unité d'application à l'objet débruité (J) d'un premier traitement (t1) comprenant un traitement à voisinage transformant les valeurs d'un élément d'objet en fonction des valeurs d'éléments d'objet voisins pour obtenir un objet transformé (K) d'un deuxième type, le premier traitement étant tel qu'il aurait pour effet de structurer le bruit contenu dans l'objet original s'il était appliqué audit objet original ;
- une unité d'application à l'objet de bruit un deuxième traitement (t2) blanc pour obtenir un objet de bruit transformé (C) quasi blanc du deuxième type ; et
- une unité d'introduction dans l'objet transformé (K) de l'objet de bruit transformé.

13. Système selon la revendication 12, comprenant en outre des moyens de capture d'image et/ou des moyens de restitution d'image.

14. Produit programme d'ordinateur pour la mise en oeuvre du procédé selon l'une quelconque des revendications 1 à 11, le produit programme d'ordinateur comprenant des instructions de code adaptées à la mise en oeuvre des étapes suivantes, lorsqu'il est chargé et exécuté sur des moyens informatiques :
- débruiter un objet original (I) d'un premier type contenant du bruit pour obtenir un objet débruité (J) dudit premier type ;
- obtenir un objet de bruit quasi blanc du premier type à partir d'une différence (B) entre l'objet original et l'objet débruité ;
- appliquer à l'objet débruité (J) un premier traitement (t1) comprenant un traitement à voisinage transformant les valeurs d'un élément d'objet en fonction des valeurs d'éléments d'objet voisins pour obtenir un objet transformé (K) d'un deuxième type, le premier traitement étant tel qu'il aurait pour effet de structurer le bruit contenu dans l'objet original s'il était appliqué audit objet original ;
- appliquer à l'objet de bruit un deuxième traitement (t2) blanc, qui transforme un objet quasi blanc en un objet quasi blanc, pour obtenir un objet de bruit transformé (C) quasi blanc du deuxième type ; et
- introduire dans l'objet transformé (K) l'objet de bruit transformé.

## Patentansprüche

1. Verfahren zur computergestützten Verarbeitung eines digitalen Objekts mit den folgenden Schritten:
- Entrauschen eines Ursprungsobjekts (I) eines ersten Typs, das Rauschen enthält, um ein entrauschtes Objekt (J) des ersten Typs zu gewinnen;
- Gewinnen eines quasi weißen Rauschobjekts des ersten Typs aus einer Differenz (B) zwischen dem Ursprungsobjekt und dem entrauschten Objekt;
- Anwenden einer ersten Verarbeitung (t1) auf das entrauschte Objekt (J), die eine Nachbarschaftsverarbeitung aufweist, die die Werte eines Objektelements in Abhängigkeit von Werten benachbarter Objektelemente transformiert, um ein transformiertes Objekt (K) eines zweiten Typs zu gewinnen, wobei die erste Verarbeitung derart ist, dass sie, wenn auf das Ursprungsobjekt angewendet, eine Strukturierung des in dem Ursprungsobjekt enthaltenen Rauschens bewirkt;
- Anwenden einer zweiten weißen Verarbeitung (t2) auf das Rauschobjekt, die ein quasi weißes Objekt in ein quasi weißes Objekt transformiert, um ein transformiertes quasi weißes Rauschobjekt (C) des zweiten Typs zu gewinnen; und
- Integrieren des transformierten Rauschobjekts in das transformierte Objekt (K).

2. Verfahren nach Anspruch 1, wobei mindestens eines von dem Ursprungsobjekt, dem entrauschten Objekt, dem transformierten Objekt, dem Rauschobjekt und dem transformierten Rauschobjekt ein digitales Bild aufweist.

3. Verfahren nach Anspruch 1 oder 2, wobei der erste Typ und der zweite Typ Objekten entspricht, die mindestens eines der Attribute Farbe, Geometrie und Schärfe aufweisen, in welchem sie sich unterscheiden, und wobei die erste Verarbeitung (t1) und die zweite Verarbeitung (t2) eine Modifikation des Attributs im Vergleich zu dem entrauschten Objekt (J) bzw. dem Rauschobjekt bewirken.

4. Verfahren nach einem der vorstehenden Ansprüche, wobei das Ursprungsobjekt (I) ein Bild des Typs RAW ist.

5. Verfahren nach einem der vorstehenden Ansprüche, wobei die erste Verarbeitung (t1) ein Entmatrizieren des entrauschten Objekts (J) aufweist.

6. Verfahren nach einem der vorstehenden Ansprüche, wobei die erste Verarbeitung (t1) ein Entbloomen mindestens eines Teils des entrauschten Objekts (J) aufweist.

7. Verfahren nach einem der vorstehenden Ansprüche, wobei die erste Verarbeitung (t1) ein Entzerren mindestens eines Teils des entrauschten Objekts (J) aufweist.

8. Verfahren nach einem der vorstehenden Ansprüche, wobei die zweite Verarbeitung (t2) jedes Element des Rauschobjekts mit mindestens einem Wert verknüpft, der von einem Wert abhängt, der mit mindestens einem entsprechenden Element der Differenz (B) zwischen dem Ursprungsobjekt (I) und dem entrauschten Objekt (J) verknüpft ist.

9. Verfahren nach Anspruch 8, wobei jedes Element der Differenz (B) zwischen dem Ursprungsobjekt (I) und dem entrauschten Objekt (J) mit einem ersten Wert verknüpft wird, der mit einem von mehreren Kanälen in Bezug steht, und wobei die zweite Verarbeitung (t2) jedes Element des Rauschobjekts zusätzlich zu dem ersten Wert, der mit dem entsprechenden Element in der Differenz (B) zwischen dem Ursprungsobjekt (I) und dem entrauschten Objekt (J) verknüpft ist, mit mindestens einem zweiten Wert verknüpft, der jeweils mit einem anderen der mehreren Kanäle in Beziehung steht, wobei der zweite Wert mit Bezug auf den ersten Wert festgelegt wird.

10. Verfahren nach einem der vorstehenden Ansprüche, wobei die zweite Verarbeitung (t2) jedes Element des Rauschobjekts mit mindestens einem Wert verknüpft, der von einem Wert abhängt, der mit mindestens einem entsprechenden Element mindestens eines Objekts vom Ursprungsobjekt (I), dem entrauschten Objekt (J) und dem transformierten Objekt (K) verknüpft ist.

11. Verfahren nach einem der vorstehenden Ansprüche, wobei die zweite Verarbeitung (t2) jedes Element des Rauschobjekts mit mindestens einem Wert verknüpft, der von mindestens einem exogenen Parameter abhängt.

12. System zur Verarbeitung eines digitalen Objekts, wobei das System konfiguriert ist, das Verfahren nach einem der vorstehenden Ansprüche durchzuführen, wobei das System aufweist:
- eine Einheit zum Entrauschen eines Ursprungsobjekts (I) eines ersten Typs, das Rauschen enthält, um ein entrauschtes Objekt (J) des ersten Typs zu gewinnen;
- eine Einheit zum Gewinnen eines quasi weißen Rauschobjekt des ersten Typs aus einer Differenz (B) zwischen dem Ursprungsobjekt und dem entrauschten Objekt;
- eine Einheit zum Anwenden einer ersten Verarbeitung (t1) auf das entrauschte Objekt (J), die eine Nachbarschaftsverarbeitung aufweist, die die Werte eines Objektelements in Abhängigkeit von Werten benachbarter Objektelemente transformiert, um ein transformiertes Objekt (K) eines zweiten Typs zu gewinnen, wobei die erste Verarbeitung derart ist, dass sie, wenn auf das Ursprungsobjekt angewendet, eine Strukturierung des in dem Ursprungsobjekt enthaltenen Rauschens bewirkt;
- eine Einheit zum Anwenden einer zweiten weißen Verarbeitung (t2) auf das Rauschobjekt, um ein transformiertes quasi weißes Rauschobjekt (C) des zweiten Typs zu gewinnen; und
- eine Einheit zum Integrieren des transformierten Rauschobjekts in das transformierte Objekt (K).

13. System nach Anspruch 12, ferner mit Einrichtungen zur Bilderfassung und/oder Einrichtungen zur Bildrekonstruktion.

14. Computerprogrammprodukt zur Durchführung des Verfahrens nach einem der vorstehenden Ansprüche 1 bis 11, wobei das Computerprogrammprodukt codierte Anweisungen aufweist, die konfiguriert sind, die folgenden Schritte durchzuführen, wenn das Computerprogrammprodukt in eine Datenverarbeitungseinrichtung geladen und zur Ausführung gebracht wird:
- Entrauschen eines Ursprungsobjekts (I) eines ersten Typs, das Rauschen enthält, um ein entrauschtes Objekt (J) des ersten Typs zu gewinnen;
- Gewinnen eines quasi weißen Rauschobjekts des ersten Typs aus einer Differenz (B) zwischen dem Ursprungsobjekt und dem entrauschten Objekt;
- Anwenden einer ersten Verarbeitung (t1) auf das entrauschte Objekt (J), die eine Nachbarschaftsverarbeitung aufweist, die die Werte eines Objektelements in Abhängigkeit von Werten benachbarter Objektelemente transformiert, um ein transformiertes Objekt (K) eines zweiten Typs zu gewinnen, wobei die erste Verarbeitung derart ist, dass sie, wenn auf das Ursprungsobjekt angewendet, eine Strukturierung des in dem Ursprungsobjekt enthaltenen Rauschens bewirkt;
- Anwenden einer zweiten weißen Verarbeitung (t2) auf das Rauschobjekt, die ein quasi weißes Objekt in ein quasi weißes Objekt transformiert, um ein transformiertes quasi weißes Rauschobjekt (C) des zweiten Typs zu gewinnen; und
- Integrieren des transformierten Rauschobjekts in das transformierte Objekt (K).

## Claims

1. Computer implemented method of processing a digital object, comprising the following steps:
- denoising an original object (I) of a first type containing noise in order to obtain a denoised object (J) of said first type;
- obtaining a quasi-white noise object of the first type from a difference (B) between the original object and the denoised object;
- applying to the denoised object (J) a first processing (t1) comprising a neighbouring processing transforming the values of an object element according to the values of adjoining object elements in order to obtain a transformed object (K) of a second type, the first processing being such that it would have the effect of structuring the noise contained in the original object if it were applied to said original object;
- applying a second white processing (t2), which transforms a quasi-white object into a quasi-white object, to the noise object in order to obtain a quasi-white transformed noise object (C) of the second type; and
- introducing the transformed noise object into the transformed object (K).

2. Method according to claim 1, in which at least one among the original object, the denoised object, the transformed object, the noise object and the transformed noise object comprises a digital image.

3. Method according to claim 1 or 2, in which said first type and said second type correspond to objects having at least one attribute among colour, geometry and sharpness, which differ from each other, and in which the first processing (t1) and the second processing (t2) have the effect of modifying said attribute relative to the denoised object (J) and to the noise object respectively.

4. Method according to one of the preceding claims, in which the original object (I) is an image of the RAW type.

5. Method according to one of the preceding claims, in which the first processing (t1) comprises a dematrixing of the denoised object (J).

6. Method according to one of the preceding claims, in which the first processing (t1) comprises a deblurring of at least part of the denoised object (J).

7. Method according to one of the preceding claims, in which the first processing (t1) comprises a deformation of at least part of the denoised object (J).

8. Method according to one of the preceding claims, in which the second processing (t2) associates with each element of the noise object at least one value dependent on a value associated with at least one element corresponding to the difference (B) between the original object (I) and the denoised object (J).

9. Method according to claim 8, in which there is associated with each element of the difference (B) between the original object (I) and the denoised object (J) a first value relating to a channel among a plurality of channels, and in which the second processing (t2) associates with each element of the noise object, in addition to said first value associated with the corresponding element within the difference (B) between the original object (I) and the denoised object (J), at least a second value relating respectively to another channel of said plurality, the second value being determined with reference to said first value.

10. Method according to one of the preceding claims, in which the second processing (t2) associates with each element of the noise object at least one value dependent on a value associated with at least one corresponding element of at least one object among the original object (I), the denoised object (J) and the transformed object (K).

11. Method according to one of the preceding claims, in which the second processing (t2) associates with each element of the noise object at least one value dependent on at least one exogenous parameter.

12. System for processing a digital object, arranged to implement the method according to one of the preceding claims, the system comprising:
- a unit for denoising an original object (I) of a first type containing noise in order to obtain a denoised object (J) of said first type;
- a unit for obtaining a quasi-white noise object of the first type from a difference (B) between the original object and the denoised object;
- a unit for applying to the denoised object (J) a first processing (t1) comprising a neighbouring processing transforming the values of an object element according to the values of adjoining object elements in order to obtain a transformed object (K) of a second type, the first processing being such that it would have the effect of structuring the noise contained in the original object if it were applied to said original object;
- a unit for applying to the noise object a second white processing (t2) in order to obtain a quasi-white transformed noise object (C) of the second type; and
- a unit for introducing the transformed noise object into the transformed object (K).

13. System according to claim 12, further comprising image capture means and/or image retrieval means.

14. A computer program product for performing the method according to anyone of claims 1 to 11, the computer program product comprising code instructions adapted for performing the following steps, when loaded and executed on computer means: - denoising an original object (I) of a first type containing noise in order to obtain a denoised object (J) of said first type;
- obtaining a quasi-white noise object of the first type from a difference (B) between the original object and the denoised object;
- applying to the denoised object (J) a first processing (t1) comprising a neighbouring processing transforming the values of an object element according to the values of adjoining object elements in order to obtain a transformed object (K) of a second type, the first processing being such that it would have the effect of structuring the noise contained in the original object if it were applied to said original object;
- applying to the noise object a second white processing (t2), which transforms a quasi-white object into a quasi-white object, in order to obtain a quasi-white transformed noise object (C) of the second type; and
- introducing the transformed noise object into the transformed object (K).
